# FASCICULE DE BREVET EUROPEEN

(11) **EP 1 537 993 B1**
(45) Date de publication et mention de la délivrance du brevet: **31.12.2008**
(21) Numéro de dépôt: 04300814.3
(22) Date de dépôt: 25.11.2004
(51) Int. Cl.: F16B 5/04, B32B 37/00, B64C 1/00, F16B 4/00

(54) **Procédé de réalisation d'une structure stratifiée et avion muni d'une telle structure**
Verfahren zur Herstellung einer Schichtstruktur und mit einer solchen Struktur ausgestattetes Flugzeug
Method for making a laminated structure and aeroplane provided with such a structure

(30) Priorité: 04.12.2003 FR 0350976
(43) Date de publication de la demande: 08.06.2005
(73) Titulaire: AIRBUS France, 31060 Toulouse (FR)
(72) Inventeur: Guittard, Dominique, 31400, Toulouse (FR); Cabanac, Jean-Pierre, 31170, Tournefeuille (FR); Roger, Jany, 44120, Vertou (FR)
(74) Mandataire: Schmit, Christian Norbert Marie

(56) Documents cités:
- DE-A1- 4 342 968
- GB-A- 2 119 467
- US-A- 4 012 884
- US-A- 4 485 510

## Description

La présente invention a pour objet un procédé de réalisation d'une structure stratifiée et un avion muni d'une telle structure. Son domaine est plus particulièrement celui de la construction des avions. L'invention peut cependant être appliquée dans d'autres domaines. Le but de l'invention est de concourir à la réalisation d'une structure stratifiée plus robuste.

Dans le domaine des avions, on réalise des structures d'avion, typiquement des voilures ou des fuselages, à partir de panneaux en matériaux composites. Par exemple ces panneaux sont des panneaux en fibres de carbone. Ces panneaux présentent l'avantage d'être légers et particulièrement résistants. Il est connu d'assembler de tels panneaux entre eux par exemple pour aboutir à des épaisseurs importantes de l'ordre de 110 mm à 200 mm. Il est aussi connu d'abouter de tels panneaux les uns à la suite des autres, par l'intermédiaire d'éclisses en métal, en général des plaques en métal. La solidarisation des ensembles se réalise par percement de l'empilement ainsi réalisé et par la mise en place d'une fixation, par exemple un boulon terminé par un filet et sur lequel est vissé un écrou, ou un rivet.

On connaît aussi des procédés de réalisation de structure stratifiée tel que décrit dans les documents US 4 012 884, US 4 485 510 et DE 4 342 968.

Il est connu dans le domaine des structures métalliques, à l'endroit des fixations, de mettre en oeuvre des interférences positives lors de la mise en place des fixations. Ces interférences positives sont obtenues en réalisant des alésages, dans l'empilement, dont les diamètres sont inférieurs aux diamètres des fixations à y engager. Ces fixations sont alors forcées dans ces alésages au moment de la fixation. Ce forçage conduit à une déformation plastique des plaques de métal dans la proximité des alésages. Cette déformation plastique conduit à une meilleure tenue des plaques dans la proximité des alésages. En pratique, un jeu négatif entre l'alésage et la fixation est de l'ordre ou supérieur à 1% du diamètre de cet alésage. De fait, plus l'interférence est importante, plus la durée de vie de la fixation est grande.

Par contre, pour les panneaux en matériaux composites, une telle interférence positive est proscrite, en particulier dans les avions. En effet, on a constaté qu'elle conduisait à des délaminages du panneau à l'endroit de l'alésage. En pratique, à cet endroit le panneau devient plus friable à l'endroit de l'alésage du fait de cette interférence. C'est le contraire du but recherché. Pour cette raison, dans le domaine des avions, le jeu de montage des fixations dans les alésages est positif. Par conséquent, du fait de la perte de résistance liée à l'abandon de la fixation avec interférence positive, on est amené à y surdimensionner les tailles, notamment les épaisseurs des éclisses. De sorte que toutes les fixations conduisent à un supplément de poids, ce qui est préjudiciable dans les avions.

Dans l'invention, on s'est rendu compte cependant que, contrairement aux habitudes prises, on pouvait effectuer des montages en interférence positive pour des structures stratifiées avec des panneaux composites. A condition toutefois que l'interférence positive soit de valeur très nettement inférieure aux valeurs connues, tout en conservant une valeur où son effet d'augmentation de la résistance est encore significatif. On s'est alors rendu compte qu'un tel seuil existait sous deux conditions. Dans une première condition, l'interférence ne doit pas dépasser 0,6% de la valeur du diamètre de l'alésage. Comme deuxième condition, pendant l'introduction de la fixation, la structure stratifiée doit être maintenue, du côté par où débouche la fixation par une plaque métallique (qui ne se délamine pas) ou par la réaction d'un socle de tirage qui empêche le délaminage. Typiquement le socle de tirage comporte un trou de tirage qui est juste assez fin pour laisser passer la pointe de la fixation au moment du tirage et pour exercer une réaction sur le bord de l'alésage en empêchant le délaminage de l'autre côté. Si la structure stratifiée comporte deux plaques de métal prenant en sandwich le panneau composite, ou au moins une plaque métallique entre le panneau et le socle, les contraintes sur le socle disparaissent.

L'idée de l'invention est qu'il est indispensable de maintenir un panneau carbone du côté de ce panneau par où débouche la fixation afin d'empêcher le délaminage. Pour cela, on peut avoir une plaque métallique au moins du côté par où débouche la fixation lorsqu'on l'introduit dans l'alésage. Dans certains cas en effet, le panneau carbone est même pris en sandwich entre deux plaques métalliques. Mais dans le cas où il n'y a pas de plaque métallique du côté où débouche la fixation, on prévoit d'empêcher le délaminage par un socle de tirage.

L'invention a donc pour objet un procédé de réalisation d'une structure stratifiée, cette structure stratifiée comportant dans un empilement un panneau en matériaux composites, dans lequel
- on présente le panneau en empilement,
- on perce l'empilement pour former un alésage de fixation,
- on introduit une tige ronde de fixation dans l'alésage, et
- on fixe la fixation,
caractérisé en ce que
- lors du percage, on réalise un jeu négatif entre un diamètre de l'alésage et un diamètre de la fixation,
- le jeu négatif ne doit pas dépasser 0.6% de la valeur du diamètre de l'alésage,
- on introduit la fixation à partir du panneau et on tire en direction d'une plaque de réaction et
- lors de l'introduction de la fixation la structure stratifiée est maintenue, du côté par où débouche la fixation, par une plaque métallique ou par réaction d'un socle de tirage.

L'invention sera mieux comprise à la lecture de la description qui suit et à l'examen des figures qui l'accompagnent. Celles-ci ne sont présentées qu'à titre indicatif et nullement limitatif de l'invention. Les figures montrent:
- Figure 1: une représentation d'une structure montée selon le procédé de l'invention;
- Figure 2: une représentation schématique d'un outil de montage utilisable avec le procédé de l'invention.

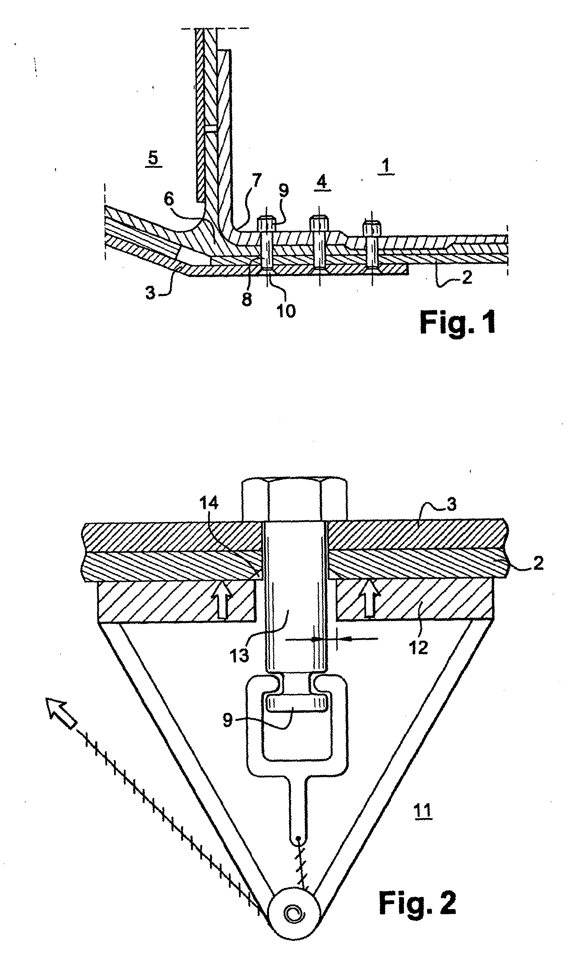

La figure 1 montre une structure stratifiée 1 obtenue par un empilement, au moins, d'un panneau 2 en un matériau composite et, ici, d'une plaque 3 en métal, par exemple en aluminium. L'empilement peut comporter plusieurs panneaux composites plaqués les uns contre les autres, Dans l'exemple la structure 1 représente une liaison entre un caisson central 4 d'un fuselage d'un avion et une voilure 5. En pratique ici, le panneau 2 est en outre contre calé par une cornière triple 6 en aluminium. La cornière 6 est elle-même maintenue par une cornière simple 7. La cornière 6 et la plaque 3 prennent le panneau 2 en sandwich. Ces différentes pièces sont réunies entre elles par des fixations telles que 8. La mise en place de ces fixations 8 se réalise dé la manière suivante. Le panneau 2 et la plaque 3, ou le panneau 2, la plaque 3 et les cornières 6 et 7, sont maintenus ensemble par des moyens auxiliaires. Alors qu'ils sont maintenus, leur empilement est percé par un alésage par lequel est censé passer la fixation 8. Puis cette fixation est introduite dans l'alésage et est fixée, par vissage, boulonnage, ou rivetage.

Dans l'invention, d'une part la fixation est introduite à partir du panneau 2. Ceci signifie que la pointe 9 de la fixation pénètre la première dans l'alésage par le panneau 2, ici par la plaque 3 avant le panneau 2. Au besoin cette pointe 9 possède, sur une longueur suffisante, un diamètre inférieur à celui de l'alésage, permettant son passage libre dans l'alésage. Selon une autre caractéristique de l'invention, la fixation 8 comporte dans ses parties utiles, au droit de l'épaisseur de l'empilement, des dimensions, un profil rond lisse avec un diamètre, plus grand que le diamètre de l'alésage. La fixation est alors tirée par sa pointe 9 pour passer complètement, afin que la tête 10 de la fixation vienne au contact de la plaque 2. On pratique ainsi une interférence positive.

Dans l'invention, on a découvert que si on ne dépassait pas une certaine limite, en pratique 0,6% du diamètre, un phénomène d'interférence positive utile prenait place. Ce phénomène a pour conséquence que le fût de la fixation exerce une contrainte plastique sur le chant de l'alésage dans le panneau 2, de telle façon que la dureté de ce panneau en est renforcée à cet endroit, conduisant à un meilleur maintien du panneau 2 sur la plaque 3, et sur les cornières 6 et 7 le cas échéant. Bien entendu, le phénomène d'interférence positive se produit aussi dans la plaque 3, mais à cet endroit compte tenu de la nature métallique de la plaque 3, et compte tenu de la faiblesse de cette interférence, aucun risque de destruction n'est à craindre. Ce mode de montage, dans ces conditions, est utilisable dans les avions.

Lorsqu'on tire sur la fixation 8, son diamètre diminue (au moins légèrement). La fixation 8 pénètre alors plus facilement dans l'alésage réalisé dans les pièces à solidariser. Pour faire pénétrer la fixation, un outil 11 de tirage, une chèvre 11 dans un exemple, figure 2, prend appui contre le panneau composite 2, ou contre une autre plaque métallique qui est plaquée contre ce matériau composite (cornière 6 ou 7 ou autre, quand elles sont présentes). Cette autre plaque métallique, de préférence de concert avec la plaque 3 située de l'autre côté du panneau 2, contribue au maintien en pincement du panneau 2 au moment de l'insertion de la fixation. Elles empêchent le délaminage.

Lorsque la structure stratifiée ne comporte que le panneau 2, avec ou sans la plaque métallique 3, la chèvre 11 servant au tirage comporte un socle 12 rigide prenant appui par réaction contre le panneau 2 au moment de la fixation. Ce socle 12 possède un trou 13 pour accueillir la tête 9 de la fixation. Ce trou 13 est très précisément calibré. Dans un exemple, il est calibré à 0,6% en plus du diamètre de l'alésage. En effet, si le trou 13 est trop gros, en sortie du panneau 2, sur le bord 14 du panneau, une fragilisation peut apparaître. Ce phénomène qui ne se produit pas lorsque les autres plaques ou cornières sont présentes, est ainsi combattu en ajustant le diamètre du trou 13 du socle 12. Si le diamètre du trou 13 du socle 12 est trop gros, il y a fragilisation 14. S'il est trop petit, la fixation entre en interférence positive avec le socle 12, et on en peut plus démonter le socle 12 de la chèvre 11.

Sous ces conditions, dans l'invention, on a donc découvert que le panneau 2 ne se délaminait pas, et d'une manière générale ne se détériorait pas, si l'interférence positive (c'est à dire le jeu négatif) n'était pas supérieure à 0,6%. Dans une solution préférée, cette interférence positive est la plus grande possible. Dans un exemple elle est de 0,3%

En pratique, la valeur de l'interférence positive est essentiellement dépendante de la différence de diamètre entre l'alésage et la fixation. Elle résulte aussi néanmoins des tolérances de fabrication et des effets d'allongement de la fixation au moment de son insertion (de son tirage en fait). De ce fait, on a découvert dans l'invention qu'à partir de 0,6%, on pouvait constater des fortes pertes dans la tenue mécanique de la fixation. Autrement dit, on a découvert qu'il existait une limite au delà de laquelle l'interférence positive ne s'exerçait pas (du fait du délaminage notamment), mais surtout, en deçà de laquelle le phénomène d'interférence positive pouvait jouer, avec tous les effets bénéfiques attendus (gain de poids, meilleure résistance), et sans les inconvénients redoutés (fragilisation à l'endroit des fixations).

Après introduction, de la tige, la fixation de la fixation 8 se produit soit par vissage d'un écrou, soit par sertissage dans une bague d'interférence. Dans un exemple, la tête 9 de la tige 8 s'arrache lorsque le tirage devient trop fort, provoquant une fixation automatique dans une bague d'interférence. En variante, un rivet est monté sur la tête 9.

On notera que les interférences préférées proposées par l'invention, inférieures à 0,6%, sont très différentes des interférences connues lorsque les plaques à assembler sont des plaques en métal. Il était ainsi connu de réaliser des interférences de l'ordre de 1%, voire plus compte tenu de ce que la valeur de l'interférence intervient directement, presque proportionnellement, sur la durée de vie de la fixation.

Dans un exemple, la longueur d'une fixation 8 ainsi montée en interférence positive a été de 140 mm. Cette épaisseur importante correspond à un empilement de plusieurs panneaux tel que 2, pris ou non en sandwich entre des plaques métalliques telles que 3. De préférence cependant, on forme la structure stratifiée à partir de plusieurs panneau en matériau composite, et à partir de plaques métalliques interposées entre les panneaux. Les pourcentages donnés ici par rapport à l'alésage sont bien entendu les mêmes que ceux donnés par rapport au diamètre de la tige de la fixation 8.

## Revendications

1. Procédé de réalisation d'une structure (1) stratifiée, cette structure stratifiée comportant dans un empilement un panneau (2) en matériaux composites, dans lequel
- on présente le panneau en empilement,
- on perce l'empilement pour former un alésage de fixation,
- on introduit une tige ronde (8) de fixation dans l'alésage, et
- on fixe la fixation,
**caractérisé en ce que**
- lors du perçage, on réalise un jeu négatif entre un diamètre de l'alésage et un diamètre de la fixation,
- le jeu négatif ne doit pas dépasser 0.6% de la valeur du diamètre de l'alésage,
- on introduit la fixation à partir du panneau et on tire en direction d'une plaque de réaction et
- lors de l'introduction de la fixation, la structure stratifiée est maintenue, du côté par où débouche la fixation, par une plaque métallique ou par réaction d'un socle de tirage.

2. Procédé selon la revendication 1, **caractérisé en ce que** la fixation est introduite à partir du panneau et est tirée en direction d'une plaque de réaction.

3. Procédé selon l'une des revendications 1 à 2, **caractérisé en ce que**
- le jeu négatif est égal à 0,3% de la valeur du diamètre de la tige.

4. Procédé selon l'une des revendications 1 à 3, **caractérisé en ce que**
- la plaque en matériau composite est une plaque en fibres de carbone.

5. Procédé selon l'une des revendications 1 à 4, **caractérisé en ce que**
- on place préalablement au percement le panneau entre deux plaques métalliques (3, 6).

6. Procédé selon l'une des revendications 1 à 5, **caractérisé en ce que**
- le métal d'une plaque est de l'aluminium.

7. Procédé selon l'une des revendications 1 à 6, **caractérisé en ce que**
- on forme la structure stratifiée à partir de plusieurs panneaux en matériau composite, et à partir de plaques métalliques interposées entre les panneaux.

8. Procédé selon l'une des revendications 1 à 7, **caractérisé en ce que**
- pour introduire la fixation, on dispose une chèvre (10) de tirage du côté de l'alésage opposé à celui par lequel est introduit la fixation,
- on munit la chèvre d'une embase de réaction avec un trou de tirage,
- le trou de tirage est de diamètre plus grand ou égal au diamètre de la fixation.

9. Procédé selon l'une des revendications 1 à 7, **caractérisé en ce que**
- on présente le panneau en empilement plaqué contre au moins une plaque (3) de métal.

10. Avion comportant une structure stratifiée réalisée selon le procédé objet de l'objet de l'une des revendications 1 à 9.

## Claims

1. A method for making a laminated structure, this structure comprising, in a stack, a panel made of composite material wherein:
- the panel is presented as a stack,
- the stack is drilled to form a fastening bore-hole,
- a round fastener rod is inserted into the bore, and
- the fastener is fastened,
**characterized in that**
- during the drilling, a negative clearance is made between a diameter of the bore-hole and a diameter of the fastener,
- the negative clearance is less than 0.6% of the value of the diameter of the rod,
- the fastener is introduced from the panel and pulled towards a reaction plate,
- when the fastener is being introduced, the laminated structure must be held, on the side by which the fastener emerges, by a metal plate or by the reaction of a pulling block.

2. A method according to claim 1, **characterized in that** the fastener is introduced from the panel and pulled towards a reaction plate,

3. A method according to one of the claims 1 to 2, wherein
- the negative clearance is equal to 0.3% of the value of the diameter of the rod.

4. A method according to one of the claims 1 to 3, wherein
- the panel made of composite material is a carbon fiber panel.

5. A method according to one of the claims 1 to 4, wherein
- prior to the drilling, the panel is placed between two metal plates.

6. A method according to one of the claims 1 to 5, wherein
- the metal of a plate is aluminum.

7. A method according to one of the claims 1 to 6, wherein
- the laminated structure is formed out of several panels made of composite material, and out of metal plates interposed between the panels.

8. A method according to one of the claims 1 to 7, wherein
- to introduce the fastener, a pulling hoist device is placed on the side of the bore-hole opposite the side by which the fastener is introduced.
- the hoist device is provided with a reaction base with a pulling hole,
- the pulling hole has a diameter greater than or equal to the diameter of the fastener.

9. A method according to one of the claims 1 to 7, wherein
- the panel is presented as a stack placed flat against at least one metal plate.

10. An aircraft comprising a laminated structure made according to the method that is the object of one of the claims 1 to 9.

## Patentansprüche

1. Verfahren zur Erzeugung einer Laminatstruktur (1), wobei diese Laminatstruktur in einer Aufschichtung eine Paneele (2) aus Verbundmaterialien enthält, bei dem
- man die Paneele in Form einer Aufschichtung anbringt,
- man die Aufschichtung durchbohrt, um eine Befestigungsbohrung zu bilden,
- man einen runden Befestigungsstift (8) in die Bohrung einführt, und
- man die Befestigung fixiert,
**dadurch gekennzeichnet, dass**
- man beim Bohren ein negatives Spiel zwischen einem Bohrdurchmesser und einem Befestigungsdurchmesser erzeugt,
- das negative Spiel 0,6% des Wertes des Bohrdurchmessers nicht übersteigen darf,
- man die Befestigung von der Paneele aus einführt und man in Richtung einer Gegenpaneele zieht und
- die Laminatstruktur beim Einführen der Befestigung auf der Seite, auf der die Befestigung herauskommt, durch eine Metallplatte oder durch die Gegenkraft eines Zugsockels festgehalten wird.

2. Verfahren nach Anspruch 1, **dadurch gekennzeichnet, dass** die Befestigung von der Paneele aus eingeführt, und in Richtung einer Gegenpaneele gezogen wird.

3. Verfahren nach einem der Ansprüche 1 bis 2, **dadurch gekennzeichnet, dass**
- das negative Spiel 0,3% des Stiftdurchmesserwerts entspricht.

4. Verfahren nach einem der Ansprüche 1 bis 3, **dadurch gekennzeichnet, dass**
- die Platte aus Verbundstoff eine Platte aus Karbonfaser ist.

5. Verfahren nach einem der Ansprüche 1 bis 4, **dadurch gekennzeichnet, dass**
- man die Paneele vor dem Bohren zwischen zwei Metallplatten (3, 6) steckt.

6. Verfahren nach einem der Ansprüche 1 bis 5, **dadurch gekennzeichnet, dass**
- das Metall einer Platte Aluminium ist.

7. Verfahren nach einem der Ansprüche 1 bis 6, **dadurch gekennzeichnet, dass**
- man die Laminatstruktur aus mehreren Verbundstoffpaneelen und aus Metallplatten bildet, die zwischen de Paneele eingefügt werden.

8. Verfahren nach einem der Ansprüche 1 bis 7, **dadurch gekennzeichnet, dass**
- man zum Einführen der Befestigung über einen Zugbock (10) auf Seiten der Bohrung verfügt, die gegenüber jener liegt, durch die die Befestigung eingeführt wird,
- man den Bock mit einer Gegenhalterung mit einem Zugloch ausstattet,
- das Zugloch einen Durchmesser aufweist, der größer oder gleich dem Durchmesser der Befestigung ist.

9. Verfahren nach einem der Ansprüche 1 bis 7, **dadurch gekennzeichnet, dass**
- die Schichtpaneele an zumindest eine Metallplatte (3) anlegt.

10. Flugzeug mit einer Laminatstruktur, die entsprechend dem Verfahren erzeugt wurde, das einem der Ansprüche 1 bis 9 entspricht.
